# EUROPEAN PATENT APPLICATION

(11) **EP 3 461 719 A1**
(43) Date of publication of application: **03.04.2019**
(21) Application number: 18190479.8
(22) Date of filing: 23.08.2018
(51) Int. Cl.: B62D 5/09, B62D 5/00

(54) **BACKUP STEERING SYSTEM FOR STEER-BY-WIRE HARVESTERS**

(30) Priority: 30.08.2017 US 201762552327 P; 02.04.2018 US 201862651343 P
(71) Applicant: AGCO Corporation, Duluth, GA 30096 (US)
(72) Inventor: Kelber, Christian Roberto, Hesston, Kansas 67062 (US)
(74) Representative: AGCO Intellectual Property Department

(57) **Abstract**

In one embodiment, a steering system for a harvesting machine, the steering system comprising: a steer-by-wire system, comprising: a first steering mechanism enabling manual steering control of a machine by an operator; a controller configured by instructions to receive signals based on operator movement of the first steering mechanism and, based on the signals, cause a valve of a hydraulic circuit to control a steering cylinder; and a backup mechanical steering system, comprising: a second steering mechanism enabling manual steering control of the machine by the operator, the second steering mechanism mechanically coupled to the valve, the second steering mechanism configured to replace the first steering mechanism based on operator intervention.

## Description

### TECHNICAL FIELD

The present disclosure is generally related to harvesting vehicles, and, in particular, harvesting vehicles that use steer-by-wire technology.

### BACKGROUND

Based on steer-by-wire technology, it is possible to steer harvesting machines like combine harvesters, forage harvesters, and sugar cane harvesters using only electronic commands. A joystick used as human-machine-interface can originate those electronic commands. The use of a joystick increases the visibility that the operator has of the field during harvesting. From a safety perspective, it is important to guarantee that the machine steering system is fail-safe. Usually, to guarantee that the machine is always steerable despite any electronic malfunction, a complete electro-hydraulic backup system is used. A complete electro-hydraulic backup system comprises a secondary electronic control unit (ECU), secondary electrical and hydraulic power supply systems, redundant sensors, a secondary battery, secondary electrically driven hydraulic pump, etc. This backup system is not only technically complex but also adds complexities to the assembly line to assure its intendent behavior in case of a fault in the main steer-by-wire system. All involved electronic components of this secondary system should be designed with a higher safety level. As a result, the cost of a steer-by-wire system becomes high and not feasible for smaller or more cost sensitive machines.

### BRIEF DESCRIPTION OF THE DRAWINGS

Many aspects of the disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views.
FIG. 1 is a schematic diagram that illustrates in fragmentary view an example environment in which an embodiment of an example steering system may be implemented.
FIGS. 2A-2C are schematic diagrams that illustrate an example foot platform for use in an embodiment of an example steering system.
FIG. 3 is a block diagram of an example controller used in an embodiment of an example steering system.
FIG. 4 is a flow diagram that illustrates an embodiment of an example steering method.

### DESCRIPTION OF EXAMPLE EMBODIMENTS

### Overview

In one embodiment, a steering system for a harvesting machine, the steering system comprising: a steer-by-wire system, comprising: a first steering mechanism enabling manual steering control of a machine by an operator; a controller configured by instructions to receive signals based on operator movement of the first steering mechanism and, based on the signals, cause a valve of a hydraulic circuit to control a steering cylinder; and a backup mechanical steering system, comprising: a second steering mechanism enabling manual steering control of the machine by the operator, the second steering mechanism mechanically coupled to the valve, the second steering mechanism configured to replace the first steering mechanism based on operator intervention.

### Detailed Description

Certain embodiments of a steering system and method are disclosed that use a steer-by-wire system and a backup mechanical steering system (also referred to herein as a backup system, backup steering system, and the like) in a harvesting machine. The backup mechanical steering system is to be used in the case of a system failure of the steer-by-wire system, among other reasons based on, for instance, field conditions. In one embodiment, the backup system comprises a backup steering mechanism (e.g., small or mini steering wheel) installed close to the floor of a cab of the harvesting machine. The backup steering mechanism is attached mechanically with a short steering column to a conventional, electro-mechanical hydrostatic steering valve. Coupled to the backup steering mechanism is a foot platform, which is configured to receive and secure (conformably) the operator's foot, enabling the operator to manually steer the backup steering mechanism with his foot.

Digressing briefly, current backup systems comprise a redundant steer-by-wire system, which requires a design with a high safety level and increases the complexity and hence cost in manufacturing, effectively providing no feasible solution for smaller or cost-sensitive harvesting machines. In contrast, by using certain embodiments of a steering system as disclosed herein, a simple fail-safe system is implemented where complexity and costs are lowered. Further, when implemented in conjunction with a low-visibility joystick for use in steer-by-wire control, certain embodiments of a steering system maintain that visibility given the location of the backup steering mechanism close to the floor of the cab.

Having summarized certain features of a steering system of the present disclosure, reference will now be made in detail to the description of a steering system as illustrated in the drawings. While a steering system will be described in connection with these drawings, there is no intent to limit it to the embodiment or embodiments disclosed herein. For instance, in the description that follows, though focus is on the use of a joystick as a manual steering mechanism for the steer-by-wire system, it should be appreciated by one having ordinary skill in the art that for some embodiments other manual steering mechanisms for the steer-by-wire system may be used, including a steering wheel, a head-set (e.g., using eye-direction detecting), voice actuation, among other types of manual operator control. As another example, though emphasis is on harvesting machines with rear-wheel drive, in some embodiments, other types of machines in the agricultural industry or machines from other industries that use a steer-by-wire system may benefit from the backup mechanical system disclosed herein, and hence are contemplated to be within the scope of the disclosure. Further, although the description identifies or describes specifics of one or more embodiments, such specifics are not necessarily part of every embodiment, nor are all various stated advantages necessarily associated with a single embodiment or all embodiments. On the contrary, the intent is to cover all alternatives, modifications and equivalents included within the scope of the disclosure as defined by the appended claims. Further, it should be appreciated in the context of the present disclosure that the claims are not necessarily limited to the particular embodiments set out in the description.

Note that reference herein to manual steering control is to be understood as steering control characterized primarily by direct operator intervention, as opposed to what may be characterized primarily as machine or satellite guided control. Note also that references hereinafter made to certain directions, such as, for example, "front", "rear", "left" and "right", are made as viewed from the rear of a harvesting machine looking forwardly.

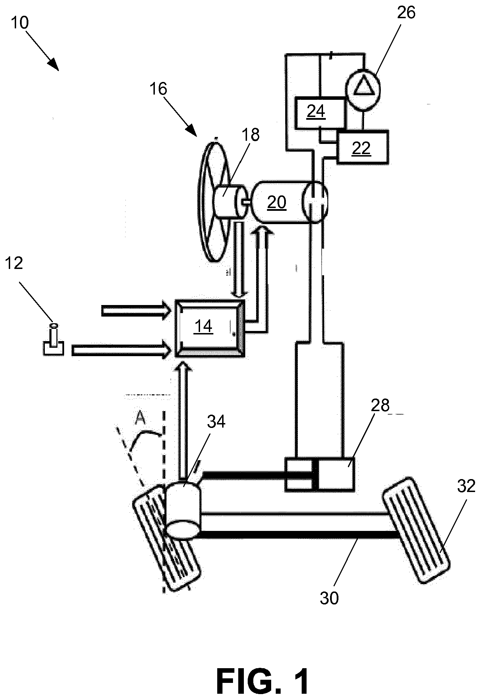

Referring now to FIG. 1, shown is an embodiment of an example environment in which an embodiment of an example steering system may be implemented. The example environment comprises a harvesting machine 10, which may include a combine harvester, sugar cane harvester, or forage harvester. The harvesting machine 10 uses rear wheel steering, as depicted in FIG. 1. The harvesting machine 10 comprises a steering mechanism 12, an electronic control unit (ECU) 14 (hereinafter, referred to as a controller), a backup steering mechanism 16, a steering wheel sensor 18, and a hydraulic circuit comprising an electro-mechanical hydrostatic valve 20 (hereinafter, referred to also as simply a valve), a hydraulic fluid tank 22 (e.g., oil tank), a relief valve 24, and a pump 26 (and tubing coupling those components together). The harvesting machine 10 further comprises a steering cylinder 28 (which in some embodiments, may be considered as part of the hydraulic circuit), steering arms 30, rear wheels 32, and a wheel angle sensor 34. Note that in one embodiment, a steer-by-wire system may include the steering mechanism 12, the controller 14, and the valve 20, whereas the backup mechanical steering system may include the steering mechanism 16 and the valve 20.

In the depicted embodiment, the steering mechanism 12 comprises a joystick. One advantage of using a joystick is that of improved visibility over a steering wheel. In other words, visibility is improved by the removal of the steering column and the steering wheel from the operator's view. The steering mechanism 12 moves in response to manual steering control (manipulations) by an operator, where the movement of the steering mechanism 12 caused by the operator is translated by the steering mechanism 12 into electronic signals/commands that are communicated to the controller 14. The electronic signals comprise commands that are provided to the controller 14 to enable a steer-by-wire form of steering control. Note that in some embodiments, the steering mechanism 12 may be of a different type. For instance, in some embodiments, the steering mechanism 12 may comprise a regular-sized or mini-steering wheel, a head-set, a microphone, or any device where movement of (or commands associated with) the steering mechanism 12 is translated to electronic signals/commands and sent to the controller 14 to enable steer-by-wire functionality. In some embodiments the steering mechanism 12 may provide haptic feedback to the operator based on movements of the steering mechanism 12.

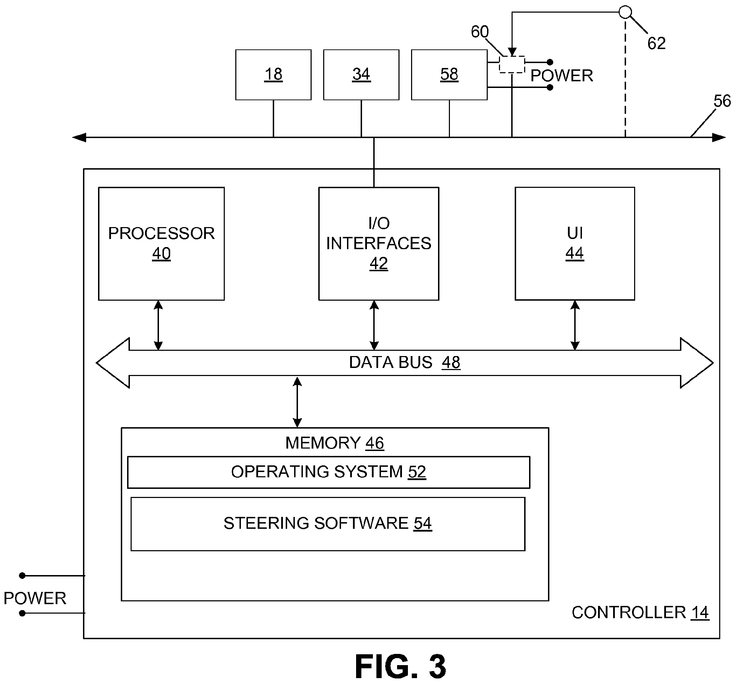

The controller 14 is described further below in association with FIG. 3. In short, the controller 14 is powered by a power source and receives the electronic signals from the steering mechanism 12, and based on the signals, actuates (via sending control signals to) the electronic or electromagnetic component (e.g., actuator) of the electro-mechanical hydrostatic valve 20, which in turn actuates the mechanical components (e.g., poppet, spool, etc.) of the valve responsible for fluid flow control, as is known. In other words, the controller 14 enables the steer-by-wire system.

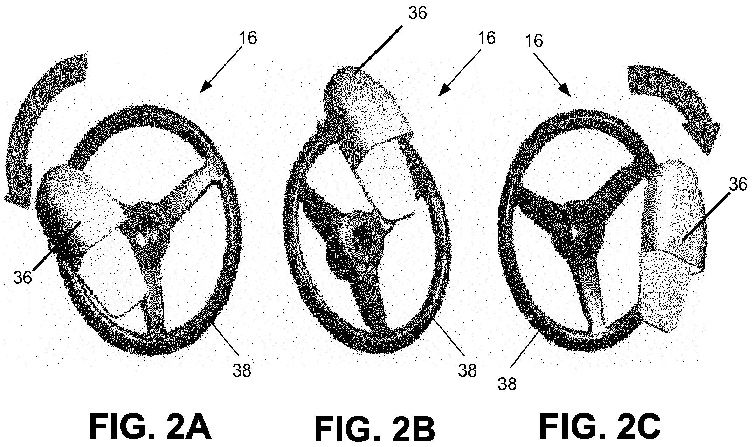

The backup steering mechanism 16 comprises a mini-steering wheel that is mechanically coupled to a shortened steering column. The backup steering mechanism 16 is located proximal to the floor, hence enabling the operator to conveniently manipulate the steering wheel of the backup steering mechanism 16 with his foot. As described further below in association with FIGS. 2A-2C, the steering wheel of the backup steering mechanism 16 has coupled to it a foot platform that is configured to enable controlled manual movement of the steering wheel via the foot of the operator. The backup steering mechanism 16 is mechanically coupled (via the shortened steering column) to the valve 20.

Coupled to the backup steering mechanism 16 is the steering wheel sensor 18. The steering wheel sensor 18 detects movement of the backup steering mechanism 16 (e.g., via the operator's foot). The steering wheel sensor 18 may be a Hall effect type sensor, optical sensor, among other types of sensors known in the art. The steering wheel sensor 18 communicates a signal to the controller 14 in response to the detected movement. In one embodiment, upon the controller 14 receiving the signal, the controller 14 interrupts power to the valve 20 (e.g., via signaling to a relay at the power input to the valve 20). In some embodiments, the receipt of the signal from the steering wheel sensor 18 is used by the controller 14 to interrupt the generation and/or sending of commands to the valve 20, resulting in replacing the steer-by-wire system with a mechanically controlled system via the backup steering mechanism 16. In some embodiments, interruption of power and/or control signals may additionally or alternatively be achieved using a switch that may be placed at or proximal to the base of the backup steering mechanism 16. For instance, the act of the operator placing his foot in the foot platform of the backup steering mechanism 16 causes depression of the switch, which in turn may cause a relay at the power input of the valve 20 to interrupt power to the valve 20, or may cause a signal to be received at the controller 14, which in turn interrupts power (via the relay) or interrupts the generation and/or sending of electronic commands to the valve 20. Given the small size and location proximal to the floor of a cab of the harvesting machine 10, visibility is still maintained when used with a steering mechanism 12 comprising a joystick.

The electro-mechanical hydrostatic valve 20 comprises an actuator (e.g., an electrical or electromagnetic component, such as a solenoid, motor, etc.) and a valve body (e.g., comprising a poppet or spool or other internal mechanism that regulates hydraulic fluid flow through the valve body based on, and under the control of, actuation of the actuator or via a mechanical linkage to the steering mechanism 16). As explained above, the steer-by-wire system comprises the steering mechanism 12 in electronic communication with the valve 20, and mechanical steering that replaces the steer-by-wire system upon system failure or other conditions comprises the backup steering mechanism 16 mechanically coupled to the valve 20. The valve 20 enables steering by regulating the flow of hydraulic fluid (e.g., oil) through the hydraulic circuit and to/from the steering cylinder 28. For instance, based either on steer-by-wire or mechanical control, the valve 20 drives hydraulic fluid flow that is available in the tank 22 and that is pressurized by the hydraulic pump 26. To avoid the hydraulic fluid pressure exceeding a defined pressure limit, the relief valve 24 is arranged in parallel to the pump 26. The hydraulic fluid driven by the valve 20 flows in tubing (e.g., hoses) to drive movement of the steering cylinder 28.

The steering cylinder 28 may comprise a hydraulic rod/piston type device that is activated based on, for instance, pressure differences across the steering cylinder 28. In some embodiments, plural steering cylinders 28 may be used to achieve at least similar functionality. The steering cylinder 28 is mechanically coupled to steering arms 30, which are mechanically coupled to the wheels 32 as is known.

The wheel angle sensor 34 is configured to sense the angle of the rear wheel 32. The angle is communicated from the wheel angle sensor 34 to the controller 14, which enables closed loop control of the steer-by-wire system by providing a basis for which the controller 14 can compare the steering command from the steering mechanism 12 with the current wheel angle from the wheel angle sensor 34 to enable suitable steering adjustment commands to the valve 20. In the case of mechanical steering, the wheel angle sensor 34 may not be needed.

Attention is now direct to FIGS. 2A-2C, which illustrate an embodiment of a foot platform 36 coupled to the backup steering mechanism 16. It should be appreciated by one having ordinary skill in the art that the foot platform illustrated in FIGS. 2A-2C are an example of one form of foot platform, and that in some embodiments, other configurations for the foot platform that facilitate manipulation of the backup steering mechanism 16 with the operator's foot may be used, and hence are contemplated to be within the scope of the disclosure. In one embodiment, the backup steering mechanism 16 comprises a mini-steering wheel 38 with the foot platform 36 coupled to a periphery of the steering wheel 38. For instance, the steering wheel 38 may be of a smaller diameter than what is normally used as the main steering mechanism in conventional harvesters. Note that variations to the design of the steering wheel 38 may be used in some embodiments. In one embodiment, the foot platform 36 is coupled to the steering wheel 38 via a ball joint (not shown), which enables the foot platform 36 to maintain a relatively consistent (somewhat north-south, or somewhat front-rear) orientation whether rotating the steering wheel 38 left (FIG. 2A), or clockwise (FIG. 2B) to steer to the right (FIG. 2C). The foot platform 36 comprises a cave-like configuration, somewhat like a house slipper, that facilitates securement or fixation (conformal fit) of the operator's foot.

Referring now to FIG. 3, shown is an embodiment of an example controller 14. Note that though emphasis in this disclosure is on the use of a single controller, in some embodiments, functionality of the steering system may be achieved through the use of plural controllers. One having ordinary skill in the art should appreciate in the context of the present disclosure that the example controller 14 is merely illustrative, and that some embodiments of the controller 14 may comprise fewer or additional components, and/or some of the functionality associated with the various components depicted in FIG. 3 may be combined, or further distributed among additional modules, in some embodiments. In some embodiments, functionality of the controller 14 may be implemented according to other types of devices, including a programmable logic controller (PLC), FPGA device, ASIC device, among other devices. It should be appreciated that certain well-known components of computer devices are omitted here to avoid obfuscating relevant features of the controller 14.

In one embodiment, the controller 14 comprises one or more processors, such as processor 40, input/output (I/O) interface(s) 42, a user interface 44, and memory 46, all coupled to one or more data busses, such as data bus 48.

The memory 46 may include any one or a combination of volatile memory elements (e.g., random-access memory RAM, such as DRAM, and SRAM, etc.) and nonvolatile memory elements (e.g., ROM, hard drive, tape, CDROM, etc.). The memory 46 may store a native operating system, one or more native applications, emulation systems, or emulated applications for any of a variety of operating systems and/or emulated hardware platforms, emulated operating systems, etc. In the embodiment depicted in FIG. 3, the memory 46 comprises an operating system 52 and steering software 54. It should be appreciated by one having ordinary skill in the art that in some embodiments, additional or fewer software modules (e.g., combined functionality) may be employed in the memory 46 or additional memory. In some embodiments, a separate storage device may be coupled to the data bus 48, such as a persistent memory (e.g., optical, magnetic, and/or semiconductor memory and associated drives).

The processor 40 may be embodied as a custom-made or commercially available processor, a central processing unit (CPU) or an auxiliary processor among several processors, a semiconductor based microprocessor (in the form of a microchip), a macroprocessor, one or more application specific integrated circuits (ASICs), a plurality of suitably configured digital logic gates, and/or other well-known electrical configurations comprising discrete elements both individually and in various combinations to coordinate the overall operation of the controller 14.

The I/O interfaces 42 provide one or more interfaces to a network comprising a communication medium 56, which may be a wired medium (e.g., controller area network (CAN) bus) as depicted in FIG. 3, a wireless medium (e.g., Bluetooth channel(s)), or a combination of wired and wireless mediums. In other words, the I/O interfaces 42 may comprise any number of interfaces for the input and output of signals (e.g., analog or digital data) for conveyance over one or more communication mediums. In the depicted embodiment, the steering wheel sensor 18, the wheel angle sensor 34, and an actuator 58 (e.g., solenoid, motor, etc.) of the valve 20 are coupled to the medium 56, enabling communication of signals/data with the controller 14 via the I/O interfaces 42. Additional components may be coupled to the medium 56, including other sensors, other controllers, other actuators, a global navigation satellite system (GNSS) receiver, and/or telephony/radio components (e.g., cellular and/or radio frequency (RF) modem), enabling communications with the controller 14.

The user interface (Ul) 44 may be a keyboard, mouse, microphone, touch-type display device, head-set, the steering mechanism 12 (e.g., joystick, steering wheel with steering column, etc.), and/or other devices (e.g., switches) that enable input by an operator (e.g., such as steering movements by an operator while sitting in the cab of the harvesting machine 10, FIG. 1) and/or outputs (e.g., commands to the steering software 54, and/or visual, audible, and/or tactile feedback of operations, etc.). In one embodiment, the user interface 44 enables the input of steering commands and may also provide feedback of the steering movements (e.g., haptic feedback, such as via the use of a vibration motor). Additional feedback provided via the user interface 44 may include a visual and/or audible alert to the operator that the steer-by-wire system has failed and/or that the backup mechanical steering control is being implemented.

Note that in some embodiments, the manner of connections among two or more components may be varied. For instance, in some embodiments, the user interface 44 may be directly connected to the medium 56, and in communication with the controller 14 via the I/O interfaces 42. In some embodiments, the steering mechanism 12 may be directly connected to the medium 56.

The steering software 54 comprises executable code/instructions that, when executed by the processor 40, receives the electronic signals/commands from the user interface 44 (e.g., the steering mechanism 12), and signals from the steering wheel sensor 18 and wheel angle sensor 34. The steering software 54 compares the wheel angle sensor input with the steering mechanism input, and outputs a control signal/commands to the actuator 58 of the valve 20 to control the flow of hydraulic fluid through the hydraulic circuit and to the steering cylinder 28, which in turn causes the steering arms 30 to correspondingly actuate to control the steering angle of the rear wheels 32.

In one embodiment, the steering software 54 also interrupts the output of control signals/commands to the actuator 58 based on receipt of input from the steering wheel sensor 18 (e.g., where the operator moves the backup steering mechanism 16 with his foot). For instance, the signal from the steering wheel sensor 18 may be received and interpreted by the steering software 54 as an instruction to interrupt commands to the actuator 58. In some embodiments, the steering software 54, in addition to, or in lieu of, interrupting commands to the actuator 58, activates a relay 60 at the power input to the actuator 58 via signaling through the I/O interfaces 42 to interrupt power to the actuator 58, replacing the steer-by-wire control with the backup mechanical steering control. In some embodiments, an emergency stop button 62 (or lever, etc.) may be activated when, or proximal in time to, the operator uses the backup steering mechanism 16. For instance, the button 62 may be disposed adjacent the backup steering mechanism 16 (e.g., in contact with the foot platform 36, FIG. 2A), and responsive to the operator inserting his foot into the platform, the button 62 is depressed, which cuts power to the actuator 58 via the relay 60. In some embodiments, the activation of the button 62 is received via signaling to the controller 14, which in turn interrupts command signals to the actuator 58. In some embodiments, the steering software 54 causes the presentation of alerts to the operator of failure of the steer-by-wire system and/or activation of the backup steering system.

Execution of the steering software 54 is implemented by the processor 40 under the management and/or control of the operating system 52. In some embodiments, the operating system 52 may be omitted and a more rudimentary manner of control implemented.

In some embodiments, functionality of the steering software 54 may be distributed among plural controllers (and hence, plural processors). For instance, each controller may be similarly configured in hardware and/or software (e.g., one or more processors, memory comprising executable code/instructions, etc.) as the controller 14, with the control strategy including a peer-to-peer or master-slave control arrangement.

When certain embodiments of the controller 14 are implemented at least in part with software (including firmware), as depicted in FIG. 3, it should be noted that the software can be stored on a variety of non-transitory computer-readable medium for use by, or in connection with, a variety of computer-related systems or methods. In the context of this document, a computer-readable medium may comprise an electronic, magnetic, optical, or other physical device or apparatus that may contain or store a computer program (e.g., executable code or instructions) for use by or in connection with a computer-related system or method. The software may be embedded in a variety of computer-readable mediums for use by, or in connection with, an instruction execution system, apparatus, or device, such as a computer-based system, processor-containing system, or other system that can fetch the instructions from the instruction execution system, apparatus, or device and execute the instructions.

When certain embodiments of the controller 14 are implemented at least in part with hardware, such functionality may be implemented with any or a combination of the following technologies, which are all well-known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

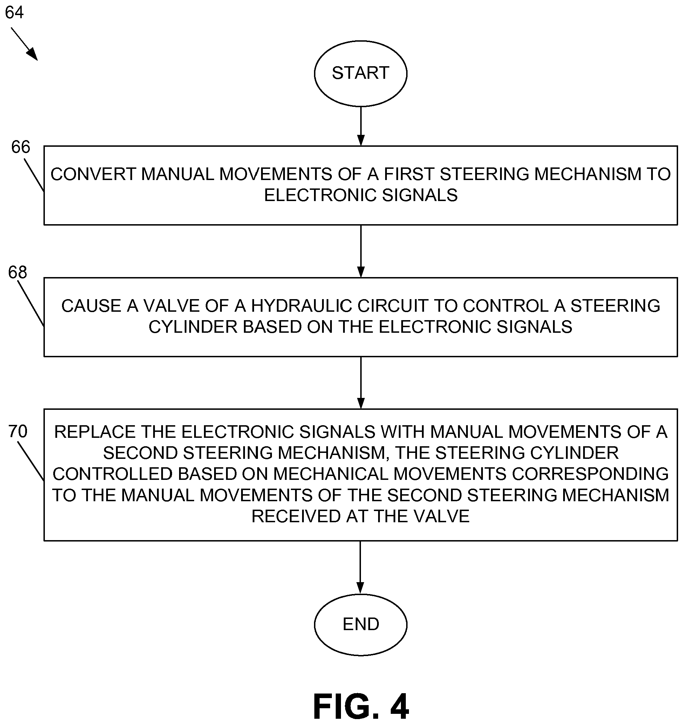

Having described certain embodiments of a steering system, it should be appreciated within the context of the present disclosure that one embodiment of a steering method, denoted as method 64 (e.g., as implemented at least in part by the steering software 54, FIG. 3) and illustrated in FIG. 4, comprises converting manual movements of a first steering mechanism to electronic signals (66); causing a hydraulic circuit to control a steering cylinder based on the electronic signals (68); and replacing the electronic signals with manual movements of a second steering mechanism, the steering cylinder controlled based on mechanical movements corresponding to the manual movements of the second steering mechanism received at the hydraulic circuit (70).

Any process descriptions or blocks in flow diagrams should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

In this description, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments, but is not necessarily included. Thus, the present technology can include a variety of combinations and/or integrations of the embodiments described herein. Although the control systems and methods have been described with reference to the example embodiments illustrated in the attached drawing figures, it is noted that equivalents may be employed and substitutions made herein without departing from the scope of the disclosure as protected by the claims.

The invention of this application may be understood further by reference to the following clauses:
Clause 1. A steering system for a harvesting machine, the steering system comprising:
   a steer-by-wire system, comprising:
      a first steering mechanism enabling manual steering control of a machine by an operator;
   a controller configured by instructions to receive signals based on operator movement of the first steering mechanism and, based on the signals, cause a valve of a hydraulic circuit to control a steering cylinder; and
   a backup mechanical steering system, comprising:
      a second steering mechanism enabling manual steering control of the machine by the operator, the second steering mechanism mechanically coupled to the valve, the second steering mechanism configured to replace the first steering mechanism based on operator intervention.
Clause 2. The steering system of clause 1, further comprising one or more steering arms coupled to the steering cylinder and one or more wheels.
Clause 3. The steering system of clause 1, wherein the valve comprises an electro-mechanical hydrostatic steering valve, the electro-mechanical hydrostatic steering valve electrically coupled to the controller and the first steering mechanism and mechanically coupled to the second steering mechanism.
Clause 4. The steering system of clause 3, wherein the hydraulic circuit further comprises a tank and a pump fluidly coupled to the electro-mechanical hydrostatic steering valve, wherein pressurized hydraulic fluid flows through the hydraulic circuit.
Clause 5. The steering system of clause 3, wherein the second steering mechanism comprises a steering wheel and a steering column mechanically coupled to the steering wheel and the electro-mechanical hydrostatic steering valve.
Clause 6. The steering system of clause 5, further comprising a foot platform coupled to the steering wheel, the foot platform comprising a cave-like structure configured to receive and secure a foot of the operator to enable manual steering control.
Clause 7. The steering system of clause 1, wherein the second steering mechanism is proximal to a floor of a cab of the machine.
Clause 8. The steering system of clause 1, further comprising a sensor configured to detect movement of the second steering mechanism.
Clause 9. The steering system of clause 8, wherein the controller is further configured to detect the operator intervention by receiving a signal from the sensor based on the sensor detecting movement by an operator of the second steering mechanism.
Clause 10. The steering system of clause 9, wherein the controller is further configured to interrupt one of control signals to the valve or power to the valve based on receipt of the signal from the sensor.
Clause 11. The steering system of clause 1, further comprising a switch coupled to the second steering mechanism.
Clause 12. The steering system of clause 11, wherein the controller is further configured to detect the operator intervention by receiving a signal from the switch based on an operator depressing the switch.
Clause13. The steering system of clause 12, wherein the controller is further configured to interrupt one of control signals to the valve or power to the valve based on receipt of the signal from the switch.
Clause 14. The steering system of clause 11, further comprising a relay coupled to the switch, wherein activation of the switch causes the relay to interrupt power to the valve.
Clause 15. A steering method for a harvesting machine, the steering method comprising:
   converting manual movements of a first steering mechanism to electronic signals;
   causing a valve of a hydraulic circuit to control a steering cylinder based on the electronic signals; and
   replacing the electronic signals with manual movements of a second steering mechanism, the steering cylinder controlled based on mechanical movements corresponding to the manual movements of the second steering mechanism received at the valve.
Clause 16. The steering method of clause 15, further comprising controlling one or more steering arms coupled to the steering cylinder and one or more wheels based on the electronic signals or the mechanical movements.
Clause 17. The steering method of clause 15, wherein the valve comprises an electro-mechanical hydrostatic steering valve, the electro-mechanical hydrostatic steering valve electrically coupled to a controller and the first steering mechanism and mechanically coupled to the second steering mechanism.
Clause 18. The steering method of clause 15, wherein replacing comprises:
   detecting movement of the second steering mechanism, the second steering mechanism configured to receive a foot of the operator to control the second steering mechanism; and
   interrupting the electronic signals or power to the valve based on the detected movement.
Clause 19. The steering method of clause 15, wherein replacing comprises:
   receiving a signal from a switch coupled to the second steering mechanism; and
   interrupting the electronic signals or power to the valve based on the signal received from the switch.
Clause 20. A non-transitory, computer readable storage medium comprising instructions that, when executed by one or more processors, causes the one or more processors to:
   convert manual movements of a first steering mechanism to electronic signals;
   cause a valve of a hydraulic circuit to control a steering cylinder based on the electronic signals; and
   cause replacement of the electronic signals with manual movements of a second steering mechanism, the steering cylinder controlled based on mechanical movements corresponding to the manual movements of the second steering mechanism received at the valve.

## Claims

1. A steering system for a harvesting machine, the steering system comprising:
a steer-by-wire system, comprising:
a first steering mechanism enabling manual steering control of a machine by an operator;
a controller configured by instructions to receive signals based on operator movement of the first steering mechanism and, based on the signals, cause a valve of a hydraulic circuit to control a steering cylinder; and
a backup mechanical steering system, comprising:
a second steering mechanism enabling manual steering control of the machine by the operator, the second steering mechanism mechanically coupled to the valve, the second steering mechanism configured to replace the first steering mechanism based on operator intervention.

2. The steering system of claim 1, further comprising one or more steering arms coupled to the steering cylinder and one or more wheels.

3. The steering system of claim 1 or 2, wherein the valve comprises an electro-mechanical hydrostatic steering valve, the electro-mechanical hydrostatic steering valve electrically coupled to the controller and the first steering mechanism and mechanically coupled to the second steering mechanism.

4. The steering system of claim 3, wherein the hydraulic circuit further comprises a tank and a pump fluidly coupled to the electro-mechanical hydrostatic steering valve, wherein pressurized hydraulic fluid flows through the hydraulic circuit.

5. The steering system of claim 3 or 4, wherein the second steering mechanism comprises a steering wheel and a steering column mechanically coupled to the steering wheel and the electro-mechanical hydrostatic steering valve.

6. The steering system of claim 5, further comprising a foot platform coupled to the steering wheel, the foot platform comprising a cave-like structure configured to receive and secure a foot of the operator to enable manual steering control.

7. The steering system of any previous claim, wherein the second steering mechanism is proximal to a floor of a cab of the machine.

8. The steering system of any previous claim, further comprising a sensor configured to detect movement of the second steering mechanism.

9. The steering system of claim 8, wherein the controller is further configured to detect the operator intervention by receiving a signal from the sensor based on the sensor detecting movement by an operator of the second steering mechanism.

10. The steering system of claim 9, wherein the controller is further configured to interrupt one of control signals to the valve or power to the valve based on receipt of the signal from the sensor.

11. The steering system of any previous claim, further comprising a switch coupled to the second steering mechanism.

12. The steering system of claim 11, wherein the controller is further configured to detect the operator intervention by receiving a signal from the switch based on an operator depressing the switch.

13. The steering system of claim 12, wherein the controller is further configured to interrupt one of control signals to the valve or power to the valve based on receipt of the signal from the switch.

14. The steering system of any of claims 11 to 13, further comprising a relay coupled to the switch, wherein activation of the switch causes the relay to interrupt power to the valve.

15. A steering method for a harvesting machine, the steering method comprising:
converting manual movements of a first steering mechanism to electronic signals;
causing a valve of a hydraulic circuit to control a steering cylinder based on the electronic signals; and
replacing the electronic signals with manual movements of a second steering mechanism, the steering cylinder controlled based on mechanical movements corresponding to the manual movements of the second steering mechanism received at the valve.

16. The steering method of claim 15, further comprising controlling one or more steering arms coupled to the steering cylinder and one or more wheels based on the electronic signals or the mechanical movements.

17. The steering method of claim 15 or 16, wherein the valve comprises an electro-mechanical hydrostatic steering valve, the electro-mechanical hydrostatic steering valve electrically coupled to a controller and the first steering mechanism and mechanically coupled to the second steering mechanism.

18. The steering method of any of claims 15 to 17, wherein replacing comprises:
detecting movement of the second steering mechanism, the second steering mechanism configured to receive a foot of the operator to control the second steering mechanism; and
interrupting the electronic signals or power to the valve based on the detected movement.

19. The steering method of any of claims 15 to 17, wherein replacing comprises:
receiving a signal from a switch coupled to the second steering mechanism; and
interrupting the electronic signals or power to the valve based on the signal received from the switch.

20. A non-transitory, computer readable storage medium comprising instructions that, when executed by one or more processors, causes the one or more processors to:
convert manual movements of a first steering mechanism to electronic signals;
cause a valve of a hydraulic circuit to control a steering cylinder based on the electronic signals; and
cause replacement of the electronic signals with manual movements of a second steering mechanism, the steering cylinder controlled based on mechanical movements corresponding to the manual movements of the second steering mechanism received at the valve.
